# EUROPÄISCHE PATENTSCHRIFT

(11) **EP 0 803 656 B1**
(45) Veröffentlichungstag und Bekanntmachung des Hinweises auf die Patenterteilung: **31.07.2002**
(21) Anmeldenummer: 97104445.8
(22) Anmeldetag: 15.03.1997
(51) Int. Cl.: F16C 29/08

(54) **Anordnung zum Verschliessen von Bohrungen**
Hole closure device
Dispositif d'obturation d'un trou

(30) Priorität: 22.04.1996 DE 19615708
(43) Veröffentlichungstag der Anmeldung: 29.10.1997
(73) Patentinhaber: INA Wälzlager Schaeffler oHG, 91072 Herzogenaurach (DE)
(72) Erfinder: Eder, Jean Marie, 67360 Woerth (FR)

(56) Entgegenhaltungen:
- DE-A- 3 046 590
- FR-A- 2 497 889
- US-A- 3 425 313

## Beschreibung

### Gebiet der Erfindung

Die Erfindung betrifft eine Anordnung enthaltend eine Führungsschiene für Lineareinheiten mit Bohrungen, welche jeweils einen radial erweiterten Endabschnitt zur Aufnahme eines Schraubenkopfes einer Befestigungsschraube aufweisen und planparallel zur Oberfläche der Führungsschiene durch Verschlußstopfen verschließbar sind, welche in der Verschlußstellung jeweils mit ihrem scheibenförmigen Oberteil und einem konzentrischen Zapfen in dem Endabschnitt der Bohrung eingesetzt sind.

### Hintergrund der Erfindung

Verschlußstopfen für Bohrungen werden vorwiegend in die Bohrungen eingepreßt, um dort ihre Halterung zu gewährleisten. Die Halterung wird dabei durch Übermaß des Verschlußstopfens gegenüber der Bohrung erreicht. Beim Einpressen sind enge Toleranzen der zu paarenden Teile einzuhalten, um ein Auswölben des scheibenförmigen Teils des Verschlußstopfens zu verhindern.

Aus dem Dokument DE-A-3 046 590 ist eine Anordnung zum Verschließen von Bohrungen bekannt, bei der Verschlußstopfen zunächst auf eine unter der Raumtemperatur liegende Temperatur gebracht werden. Da die Stopfen mit einem geringen Übermaß ausgelegt sind, lassen sie sich nach ihrer Abkühlung und der dadurch hervorgerufenen Schrumpfung in die Bohrungen einsetzen. Bei anschließender Erwärmung auf Raumtemperatur dehnen sich die Stopfen wieder aus und verklemmen sich dabei in der Bohrung.

Diese Vorgehensweise hat jedoch den Nachteil, daß aufwendige Maßnahmen zum Abkühlen der Stopfen getroffen werden müssen. Außerdem sind zusätzliche Mittel erforderlich, um die Stopfen bis zu ihrem Erwärmen auf Raumtemperatur in der Bohrung zu halten. Es besteht auch die Gefahr des Verkippens des Stopfens in der Bohrung, was wiederum die Linearbewegung eines Schlittens auf der Schiene beeinträchtigen würde und zur Zerstörung der Lineareinheit führen könnte.

Das Dokument DE-U-9 316 349 zeigt eine Anordnung der eingangs genannten Art, bei der die Verschlußstopfen jeweils einen konzentrischen Ansatz aufweisen, der sich im montierten Zustand teilweise bis in ein Innenmehrkantprofil des Schraubenkopfes erstreckt. Der Verschlußstopfen wird in seiner Lage in der Bohrung der Führungsschiene dadurch fixiert, daß der verbleibende Hohlraum des Innenmehrkantprofils mit einem aushärtbaren Mittel, beispielsweise einem Gießharz, gefüllt wird. Dieses Verfahren ermöglicht zwar eine hervorragende Fixierung des Verschlussstopfens, ist aber durch die Notwendigkeit des Ausgießens mit dem aushärtbaren Mittel auch sehr aufwendig.

Aus dem Dokument FR-A-2 497 889 ist eine Anordnung mit einem Verschlußstopfen bekannt, der einstückig aus einem massiven Kern und einer Hülse gebildet ist, die längs einer Sollbruchstelle mit dem Kern verbunden ist. Dieser Verschlußstopfen ist aus Kunststoff hergestellt und für die Anordnung in einer Mutter vorgesehen. Seine Hülse weist an einer Umfangsstelle einen durchgehenden Schlitz auf und greift in ungefähr der Hälfte des Gewindes der Mutter ein, in welcher sie angeordnet ist. Wenn nun der Kern in die Hülse eingedrückt wird, bricht er von der Hülse ab und weitet diese auf. Dadurch wird ein Verschlußstopfen aus Kunststoff gebildet, der sich fest mit dem Gewinde der Mutter verbindet.

### Zusammenfassung der Erfindung

Der Erfindung liegt die Aufgabe zugrunde, eine möglichst einfache und leicht montierbare Anordnung zum Verschließen von Bohrungen in Führungsschienen zu schaffen.

Diese Aufgabe wird erfindungsgemäß dadurch gelöst, daß in dem Endabschnitt zwischen dem Oberteil des Verschlußstopfens und dem Schraubenkopf eine kreisringförmige, an einer Umfangsstelle einen durchgehenden Radialschlitz aufweisende Klemmscheibe angeordnet ist, in deren Bohrung der Zapfen des Verschlußstopfens eingepreßt ist. Dabei ist das scheibenförmige Oberteil des Verschlußstopfens zweckmäßigerweise im Durchmesser mit geringerem Spiel gegenüber dem radial erweiterten Endabschnitt der Bohrung ausgeführt. Diese Vorrichtung zum Verschließen der Führungsschienenbohrung besteht also aus zwei in dem erweiterten Endabschnitt der Bohrung eingesetzten Teilen, nämlich dem Verschlußstopfen und der Klemmscheibe. Im montierten Zustand liegt die Klemmscheibe an dem Schraubenkopf an. Der konzentrische Zapfen wird in die Bohrung der Klemmscheibe eingepreßt und spreitzt diese auf, so daß sich die Klemmscheibe in dem radial erweiterten Endabschnitt der Führungsschienenbohrung verklemmt und den Verschlußstopfen in seiner Lage fixiert.

Der Schraubenkopf kann einen stirnseitig geöffneten Hohlraum mit einem Innenmehrkantprofil aufweisen, in welchen der Zapfen des Verschlußstopfens hineinragt. Das erfolgt dann, wenn die axiale Länge des Zapfens größer ist als, diejenige der Klemmscheibe.

### Kurze Beschreibung der Zeichnungen

Ein Ausführungsbeispiel der Erfindung ist in der Zeichnung dargestellt und wird im folgenden näher beschrieben. Es zeigen:

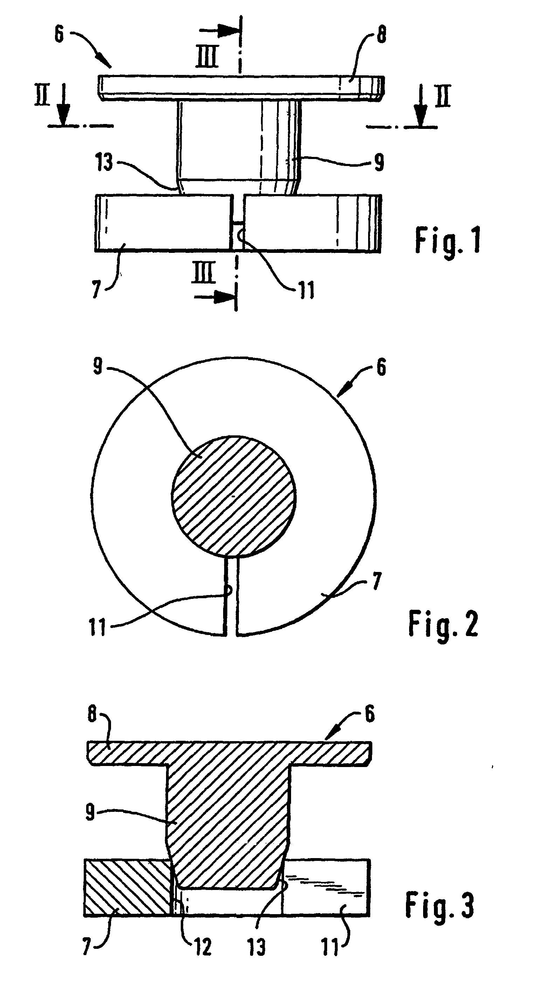

- Figur 1: einen Verschlußstopfen mit einer angrenzenden Klemmscheibe für eine erfindungsgemäße Anordnung in der Seitenansicht;
- Figur 2: einen Querschnitt durch die Verschlußteile gemäß Linie II-II der Figur 1;
- Figur 3: einen Längsschnitt durch die Verschlußteile gemäß Linie III-III der Figur 1;
- Figur 4: einen Längsschnitt durch die Bohrung einer Führungsschiene, die darin eingesetzte Klemmscheibe und den angrenzenden, noch nicht eingepreßten Verschlußstopfen;
- Figur 5: den Längsschnitt gemäß Figur 4, jedoch nach dem Einpressen des Verschlußstopfens in die Klemmscheibe.

### Ausführliche Beschreibung der Zeichnungen

Zur Befestigung an einer Anschlußkonstruktion weist eine Führungsschiene 1 mehrere in Abständen hintereinander angeordnete Bohrungen 2 auf. In jeder Bohrung 2 ist eine Befestigungsschraube 3 eingesteckt, deren Schraubenkopf 4 sich in einem radial erweiterten Endabschnitt 5 der Bohrung 2 befindet. Der Endabschnitt 5 ist außerdem für die Aufnahme von Verschlußteilen vorgesehen. Diese bestehen aus einem Verschlußstopfen 6 und einer Klemmscheibe 7.

Der Verschlußstopfen 6 weist als einstückiges rotationssymmetrisches Bauteil ein scheibenförmiges Oberteil 8 und einen davon abstehenden konzentrischen Zapfen 9 auf. In der Verschlußstellung der Bohrung 2 befindet sich die äußere stimseitige Oberfläche des scheibenförmigen Oberteils 8 in der Ebene der Oberfläche 10 der Führungsschiene 1, von welcher der radial erweiterte Endabschnitt 5 der Bohrung 2 ausgeht.

Die Klemmscheibe 7 ist als scheibenförmiger Kreisring ausgebildet, der an einer Umfangsstelle einen durchgehenden Radialschlitz 11 aufweist. Sie kann daher federnd radial aufgeweitet werden. Im montierten Zustand liegt die Klemmscheibe 7 innerhalb des Endabschnitts 5 der Bohrung 2 stirnseitig an dem Schraubenkopf 4 an. Ihre Bohrung 12 hat einen etwas geringeren Durchmesser als der Zapfen 9 des Verschlußstopfens 6.

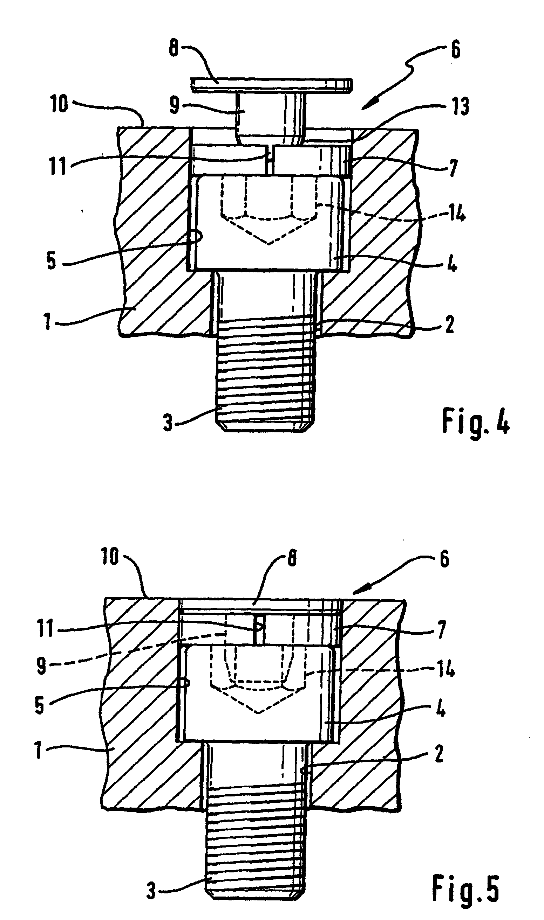

Zum Verschließen der Bohrung 2 wird der Verschlußstopfen 6 mit seinem Zapfen 9 in die Bohrung 12 der Klemmscheibe 7 gepreßt. Eine Fase 13, die am freien Ende des Zapfens 9 ausgebildet ist, ermöglicht das Eindringen des Zapfens 9 in die Bohrung 12. Dabei wird die Klemmscheibe 7 radial aufgeweitet, legt sich mit ihrer äußeren Umfangsfläche an der inneren Oberfläche des Endabschnitts 5 der Bohrung 2 an und verklemmt sich dort. Der Zapfen 9 wird so weit in die Bohrung 12 eingetrieben, bis das scheibenförmige Oberteil 8 sich vollständig in dem Endabschnitt 5 befindet und, wie in Figur 5 dargestellt, bündig mit der Oberfläche 10 der Führungsschiene 1 die Bohrung 2 nach außen verschließt. In diesem Zustand ragt der Zapfen 9 teilweise in ein Innenmehrkantprofil 14 des Schraubenkopfes 4 hinein. Mit Hilfe der Klemmscheibe 7 ist der Verschlußstopfen 6 auf einfache Weise in dem Endabschnitt 5 der Bohrung 2 befestigt.

### Bezugszahlenliste

- 1: Führungsschiene
- 2: Bohrung der Führungsschiene
- 3: Befestigungsschraube
- 4: Schraubenkopf
- 5: radial erweiterter Endabschnitt
- 6: Verschlußstopfen
- 7: Klemmscheibe
- 8: scheibenförmiges Oberteil
- 9: konzentrischer Zapfen
- 10: Oberfläche der Führungsschiene
- 11: Radialschlitz
- 12: Bohrung der Klemmscheibe
- 13: Fase
- 14: Innenmehrkantprofil

## Patentansprüche

1. Anordnung enthaltend eine Führungsschiene (1) für Lineareinheiten mit Bohrungen (2), welche jeweils einen radial erweiterten Endabschnitt (5) zur Aufnahme eines Schraubenkopfes (4) einer Befestigungsschraube (3) aufweisen und planparallel zur Oberfläche der Führungsschiene (1) durch Verschlußstopfen (6) verschließbar sind, welche in der Verschlußstellung jeweils mit ihrem scheibenförmigen Oberteil (8) und einem konzentrischen Zapfen (9) in dem Endabschnitt (5) der Bohrung (2) eingesetzt sind, **dadurch gekennzeichnet, daß** in dem Endabschnitt (5) eine kreisringförmige, an einer Umfangsstelle einen durchgehenden Radialschlitz (11) aufweisende Klemmscheibe (7) angeordnet ist, in deren Bohrung (12) der Zapfen (9) des Verschlußstopfens (6) eingepreßbar ist und welche in Verschlußstellung zwischen dem Oberteil (8) des Verschlußstopfens (6) und dem Schraubenkopf (4) liegt.

2. Anordnung nach Anspruch 1, **dadurch gekennzeichnet, daß** das scheibenförmige Oberteil (8) des Verschlußstopfens (6) im Durchmesser mit geringem Spiel gegenüber dem radial erweiterten Endabschnitt (5) der Bohrung (2) ausgeführt ist.

3. Anordnung nach Anspruch 1, **dadurch gekennzeichnet, daß** der Schraubenkopf (4) einen stirnseitig geöffneten Hohlraum mit einem Innenmehrkantprofil (14) aulweist, in welchen der Zapfen (9) des Verschlußstopfens (6) hineinragt.

## Claims

1. Arrangement comprising a guide rail (1) for linear units with bores (2), each bore having a radially expanded end portion (5) for accommodating the head (4) of a fixing screw (3) and being capable of being closed off plane parallel to the surface of the guide rail (1) by blanking plugs (6) which, in the blanking position, are inserted with their disc-shaped top part (8) and a concentric peg (9) in the end portion (5) of the bore (2), **characterised in that** in the end portion (5) there is a circular clamping disc (7) having a continuous radial slot (11) at one point on its circumference, into whose bore (12) the peg (9) of the blanking plug (6) can be pressed, and which is located between the upper part (8) of the blanking plug (6) and the screw head (4) in the blanking position.

2. Arrangement according to claim 1, **characterised in that** the disc-shaped upper part (8) of the blanking plug (6) is constructed with little play in diameter relative to the radially expanded end portion (5) of the bore (2).

3. Arrangement according to claim 1, **characterised in that** the screw head (4) has a cavity, open on the end face, having an internal polygonal profile (14) into which the peg (9) of the blanking plug (6) projects.

## Revendications

1. Dispositif comprenant un rail de guidage (1) pour délimiter le linéaire muni de perçage (2), chaque perçage ayant un segment d'extrémité (5) élargi radialement pour recevoir la tête (4) d'une vis de fixation (3), et ce perçage étant destiné à être fermé par un bouchon (6) de manière plane par rapport à la surface supérieure du rail de guidage (1), ce bouchon étant placé en position d'obturation, avec sa partie supérieure (8) en forme de disque et un téton concentrique (9) dans le segment d'extrémité (5) du perçage (2),
**caractérisé en ce que**
dans le segment d'extrémité (5), il est prévu une rondelle de serrage (7) en forme d'anneau de cercle, ayant à un point de sa périphérie une fente radiale traversante (11), et le perçage (12) de la rondelle reçoit le téton (9) du bouchon d'obturation (6) enfoncé de force, et en position de fermeture, la rondelle se trouve entre la partie supérieure (8) du bouchon (6) et la tête de vis (4).

2. Dispositif selon la revendication 1,
**caractérisé en ce que**
la partie supérieure (8) en forme de rondelle du bouchon (6) a un diamètre ayant un léger jeu par rapport au segment d'extrémité radialement élargi (5) du perçage (2).

3. Dispositif selon la revendication 1,
**caractérisé en ce que**
la tête de vis (4) présente une cavité ouverte dans sa face frontale avec un profil à pans multiples intérieurs (14) dans lequel pénètre le téton (9) du bouchon d'obturation (6).
